Europäisches Patentamt

European Patent Office

Office européen des brevets

(19)

(11) Veröffentlichungsnummer: **0 065 737**
**B1**

# EUROPÄISCHE PATENTSCHRIFT

(45) Veröffentlichungstag der Patentschrift:
24.10.84

(51) Int. Cl.³: **B 21 D 43/24**, B 65 G 59/04

(21) Anmeldenummer: 82104322.1

(22) Anmeldetag: 17.05.82

(54) **Magnetische Spreizvorrichtung für einen Blechstapel aus magnetisierbaren Einzelblechen mit Mittenbohrung.**

(30) Priorität: 27.05.81 DE 3121203

(43) Veröffentlichungstag der Anmeldung:
01.12.82 Patentblatt 82/48

(45) Bekanntmachung des Hinweises auf die Patenterteilung:
24.10.84 Patentblatt 84/43

(84) Benannte Vertragsstaaten:
CH LI SE

(56) Entgegenhaltungen:
DD - A - 112 918
DD - A - 145 011

(73) Patentinhaber: **Siemens Aktiengesellschaft, Berlin und München Wittelsbacherplatz 2, D-8000 München 2 (DE)**

(72) Erfinder: **Eberling, Richard, Moosbacher Haupststrasse 22, D-8501 Feucht (DE)**
Erfinder: **Voll, Werner, Schmausenbuckstrasse 71, D-8500 Nürnberg (DE)**

## Beschreibung

Die Erfindung betrifft eine magnetische Spreizvorrichtung nach dem Oberbegriff des Anspruchs 1.

Bei bekannten magnetischen Spreizvorrichtungen für solche Blechstapel, die auf Paletten mit stehend festangeordneten Zentrierdornen gelagert sind, werden zum Aufspreizen der an den Zentrierdornen geführten oberen Endbereiche der Blechstapel zwecks Einzelentnahme der jeweils obersten Einzelbleche um den äusseren Umfang der besagten Endbereiche entweder mehrere in verschiedenen Ebenen stehend gelagerte Permanentspreizmagnete oder in rhythmischer Folge schaltbare Elektromagnete gemäss DE-AS Nr. 1266687 angebracht, die in ihrem axial erstreckten Wirkungsbereich die Einzelbleche fächerförmig aufspreizen, so dass das jeweils oberste Einzelblech zur Zuführung an anderenorts befindliche Weiterverarbeitungsstellen mittels einer Haftvorrichtung abgenommen und dorthin gebracht werden kann. Dies ist z.B. bei gelagerten Blechronden für elektrische Maschinen oder Apparate zur Zuführung der Einzelbleche an Stanzmaschinen notwendig. Für diese Fälle ist ferner gemäss der DE-AS Nr. 1266687 die zusätzliche Unterbringung von entsprechend geschalteten und beabstandeten Spreizmagnetanordnungen im Zentrierdorn bekannt.

Bei dieser Art ist für jeden Blechstapel ein stehender Zentrierdorn zur Führung der aufgespreizten Einzelbleche notwendig, der die maximale Höhe des Blechstapels festlegt. Weiterhin muss die stehend am Umfang des Blechstapels angeordnete magnetische Spreizvorrichtung an den Aussendurchmesser des Blechstapels angepasst sein, damit sie den Blechstapel in einem bestimmten gleichmässigen Abstand umgibt. Da diese Spreizvorrichtung den Blechstapel in jedem Fall im oberen Bereich umgibt, ist der Zugriff zum jeweils aufgespreizten obersten Einzelblech erschwert und wegen der besagten Anordnung ein erhöhter Platzbedarf in der Umgebung jedes Blechstapels für die Aufstellung der Spreizvorrichtung erforderlich. Dieser erhöhte Platzbedarf durch eine am Aussenumfang angeordnete Spreizvorrichtung ist auch bei der Anordnung nach der DE-OS Nr. 2043968 erforderlich, da die einzige Magnetspreizvorrichtung entlang des an einem unmagnetischen, stehend angeordneten Zentrierdorn fixierten Blechstapels verschieblich geführt ist.

Der Erfindung liegt die Aufgabe zugrunde, eine magnetische Spreizvorrichtung zu schaffen, bei der stehend angeordnete Zentrierdorne für jeden einzelnen Blechstapel entbehrlich sind und der Platzbedarf um jeden zentrierdornlosen Blechstapel herum kleiner gehalten sowie die Höhe der Blechstapel den jeweiligen Bedürfnissen entsprechend frei gewählt werden können, wobei gegebenenfalls die Spreizvorrichtung als Transportmittel wenigstens für Teilstapel mitverwendet werden kann.

Die Lösung der gestellten Aufgabe gelingt bei einer gattungsgemässen magnetischen Spreizvorrichtung durch die Massnahmen nach dem Kennzeichen des Anspruchs 1.

Vorteilhafte Ausgestaltungen der Erfindung sind Gegenstand von Unteransprüchen.

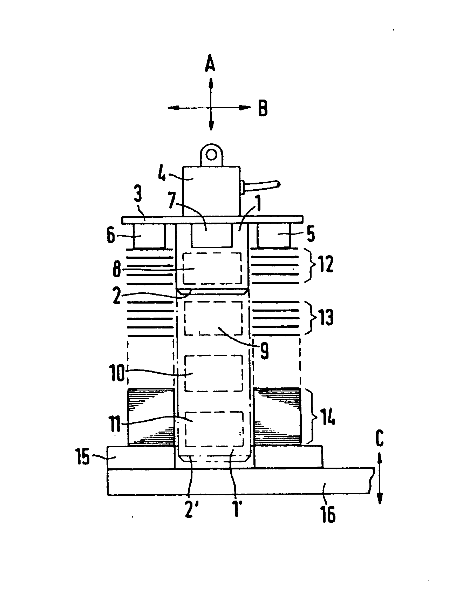

Ein Ausführungsbeispiel der Erfindung ist schematisch in der Zeichnung dargestellt und nachfolgend näher erläutert. Auf einer Palette 15, die mittels einer nur angedeuteten Hubeinrichtung 16 in Pfeilrichtung C höhenverstellbar ist, ist ein Blechstapel aus magnetisierbaren Einzelblechen mit Mittenbohrung frei gelagert, wobei die Mittenbohrungen der Einzelbleche ausreichend genau fluchten, um das Einsenken eines hängend angeordneten und in Pfeilrichtung A heb- und senkbaren Zentrierdornes 1 bzw. 1' von oben her in den Blechstapel zu ermöglichen.

Wenn es in der Hauptsache darum geht, von einem Blechstapel jeweils das oberste Einzelblech für sich abzunehmen, dann kann ein kurzer Zentrierdorn 1 mit nur einem Elektrospreizmagneten 8 in Innern seines unmagnetischen Rohrkörpers Verwendung finden. Der Rohrkörper ist mit einer unmagnetischen Bodenplatte 2 nach unten abgeschlossen und enthält nur den eingegossenen Elektrospreizmagneten 8. Der Rohrkörper ist an seiner Oberseite von einer unmagnetischen, über den Dornumfang vorragenden Abschlussplatte 3 abgeschlossen, die oberseitig über eine Tragvorrichtung 4 mit einem nicht dargestellten Hebezeug oder Schlitteneinheit verbunden ist. Die Tragvorrichtung 4 nimmt die Anschlussverbindungen zu dem Elektrospreizmagneten auf.

An der über den Dornumfang vorragenden Unterseite der Abschlussplatte 3 sind zwei diametral angeordnete, schaltbare Haftvorrichtungen 5, 6 für das aufgespreizte oberste Einzelblech sowie ein berührungsloser elektrischer Abtaster 7 vorgesehen, der in axialer Dornrichtung vor den Unterseiten der Haftvorrichtungen endet. Die Haftvorrichtungen 5, 6 können unabhängig von dem Elektrospreizmagneten 8 betätigt werden. Sobald das oberste Einzelblech von den Haftvorrichtungen 5, 6 gehalten ist, kann nach Abschalten des Elektrospreizmagneten 8 und dadurch bedingten Abfall des Teilstapels 12 auf den Stapelrest 14 unter dem Zentrierdorn 1 von Hand oder mit einer Transportvorrichtung das Einzelblech nach Abschalten der Haftvorrichtungen 5, 6 entfernt werden. Durch Wiedereinschalten der Elektrospreizmagneten 8 und der Haftvorrichtungen 5, 6 wird der obere Bereich des Blechstapels wiederum aufgespreizt und das jetzt oben liegende Einzelblech abgehoben.

Damit der Abstand des Stapelrestes zum Elektrospreizmagneten und den Haftvorrichtungen nicht zu gross wird, um die notwendige Funktion in Frage zu stellen, kann durch den berührungslosen Abtaster 7 ein Steuersignal für die Hubeinrichtung 16 gegeben werden, der den Stapelrest über die Palette 15 wiederum auf die Anfangsentfernung anhebt. Dabei ist unterstellt, dass die Bodenplatte 2 ausreichenden Abstand von der Oberkante des Stapelrestes nach Abfall des aufgespreizten Teilstapels hat, um das oberste Einzelblech zwischen beiden entfernen zu können.

Andererseits muss der Zentrierdorn mit dem gehaltenen Einzelblech in Abhängigkeit von einem Steuersignal in Pfeilrichtung A gehoben und/oder die Palette 15 in Pfeilrichtung C gesenkt werden.

Wenn nicht die Abnahme des obersten Einzelbleches sondern die Verteilung des Blechstapels in Teilstapel an verschiedenen Orten gefordert ist und von diesen jeweils die Einzelbleche zur Weiterverarbeitung abgenommen werden sollen, kann ebenfalls die Spreizvorrichtung verwendet werden, wobei die Spreizvorrichtung mit eingeschalteten Elektrospreizmagneten 8 durch ein ortsveränderliches, nicht dargestelltes Hebezeug in Pfeilrichtung A und B verstellt wird.

Zum Transport eines ganzen Blechstapels oder zumindest eines grösseren Teiles davon kann, wie strichpunktiert angedeutet ist, der Zentrierdorn 1' zur Aufnahme mehrerer untereinander beabstandet angeordneter und gesondert schaltbarer Elektrospreizmagneten 8 bis 11 verlängert und mit einer Bodenplatte 2' abgeschlossen sein.

Im dargestellten Fall ist bei voll in den Blechstapel eingesenkten Zentrierdorn 1' sowohl der Elektrospreizmagnet 8 als auch der Elektrospreizmagnet 9 eingeschaltet, so dass die zugeordneten Teilstapel 12 und 13 vom Stapelrest 14 abgehoben und aufgespreizt sind. Bei Erregung auch der übrigen Elektrospreizmagneten 10 und 11 ist der Stapelrest 14 in zwei weitere Teilstapel aufgeteilt und diese sind aufgespreizt, so dass insgesamt vier gespreizte Teilstapel durch den Zentrierdorn 1' transportiert und die einzelnen Teilstapel durch Abschalten der einzelnen Elektrospreizmagneten 8 bis 11 an einem oder verschiedenen Orten abgelegt werden können.

## Patentansprüche

1. Magnetische Spreizvorrichtung mit heb- und senkbaren Spreizmagneten (8 bis 11) für die Entnahme magnetisierbarer Einzelbleche eines Blechstapels, die an einem in ihre Mittenbohrung passenden unmagnetischen Zentrierdorn (1, 1') geführt sind, sowie einer an einer Tragvorrichtung angeordneten Haftvorrichtung (5, 6) für das aufgespreizte oberste Einzelblech, dadurch gekennzeichnet, dass die magnetische Spreizvorrichtung (8 bis 11), die Haftvorrichtung (5, 6) und der Zentrierdorn (1, 1') zu einer hängend heb-, senk- und schwenkbar gehaltenen Baueinheit zusammengefasst sind und hierzu mindestens ein schaltbarer Elektrospreizmagnet (8 bis 11) in Innern eines endseitig geschlossenen, in die Mittenbohrung passenden unmagnetischen Rohrkörpers (1, 1') angeordnet ist, der an seinem oberen Ende mindestens eine seitlich angeordnete, gesondert schaltbare Haftvorrichtung (5, 6) trägt.

2. Magnetische Spreizvorrichtung nach Anspruch 1, dadurch gekennzeichnet, dass im rohrförmigen Zentrierdorn (1, 1') übereinander im Abstand mehrere gesondert schaltbare Elektrospreizmagnete (8 bis 11) isolierend eingegossen sind.

3. Magnetische Spreizvorrichtung nach einem der beiden Ansprüche 1 oder 2, dadurch gekennzeichnet, dass der rohrförmige Zentrierdorn (1, 1') am unteren Ende durch eine unmagnetische Bodenplatte (2) und am oberen Ende durch eine ebenfalls unmagnetische, über den Umfang des Zentrierdornes vorragende obere Abschlussplatte (3) abgeschlossen ist, an deren Unterseite zwei diametrale, schaltbare Haftvorrichtungen (5, 6) befestigt sind.

4. Magnetische Spreizvorrichtung nach Anspruch 3, dadurch gekennzeichnet, dass an der radial vorragenden Unterseite der Abschlussplatte (3) ausserdem ein berührungsloser elektrischer Abtaster (7) angeordnet ist, der in axialer Dornrichtung im Bereich der Haftvorrichtung (5, 6) endet.

## Claims

1. A magnetic spreading device having spreading magnets (8 to 11), which can be raised and lowered, for removing magnetizable individual sheets from a stack of sheets which are guided on a non-magnetic centering mandrel (1, 1') which fits into its central bore, and a holding device (5, 6), arranged on a supporting device, for the uppermost spread individual sheet, characterised in that the magnetic spreading device (8 to 11), the holding device (5, 6) and the centering mandrel (1, 1') are combined to form a structural unit which is suspended so as to be capable of being raised, lowered and rotated, and for this purpose a switchable spreading electromagnet (8 to 11) is arranged inside a non-magnetic tubular body (1, 1') which is closed at its ends and fits into the central bore and which at its upper end supports at least one laterally arranged, separately switchable holding device (5, 6).

2. A magnetic spreading device according to Claim 1, characterised in that a plurality of separately switchable spreading electromagnets (8 to 11) are inserted in insulating manner one above another at spaced intervals into the tubular centering mandrel (1, 1').

3. A magnetic spreading device according to Claim 1 or 2, characterised in that, at the lower end, the tubular centering mandrel (1, 1') is closed by a non-magnetic base plate (2) and, at the upper end, it is closed by a similarly non-magnetic upper end plate (3) which projects beyond the periphery of the centering mandrel and to whose underside two diametrically arranged, switchable holding devices (5, 6) are secured.

4. A magnetic spreading device according to Claim 3, characterised in that, on the radially projecting underside of the end plate (3), there is further arranged an electrical proximity sensor (7) which terminates in the axial direction of the mandrel in the region of the holding device (5, 6).

## Revendications

1. Dispositif magnétique de séparation avec des aimants de séparation (8 à 11) susceptibles d'être soulevés et abaissés pour prélever des tôles aimantables d'une pile de tôles, lesdites tôles étant guidées sur un mandrin de centrage (1, 1') non magnétique adapté à passer dans leur perçage central, ainsi qu'avec un dispositif de collage (5, 6) pour la tôle individuelle supérieure qui a été séparée, et agencé sur un dispositif de support, caractérisé par le fait que le dispositif magnétique de séparation (8 à 11), le dispositif de collage (5, 6) et le mandrin de centrage (1,1') sont rassemblés pour former une unité de construction suspendue, capable d'être soulevée, abaissée et basculée, et qu'à cet effet au moins un électro-aimant commutable de séparation (8 à 11) est disposé à l'intérieur d'un corps tubulaire (1, 1') non magnétique, fermé du côté de son extrémité et s'adaptant dans le perçage central, ledit corps tubulaire portant à son extrémité supérieure au moins un dispositif de collage (5, 6) disposé latéralement et commutable séparément.

2. Dispositif magnétique de séparation selon la revendication 1, caractérisé par le fait que dans le mandrin de centrage de forme tubulaire (1, 1') sont noyés avec isolation plusieurs électro-aimants successifs et à distance l'un de l'autre, électro-aimants qui sont susceptibles d'être commutés séparément.

3. Dispositif magnétique de séparation selon l'une des revendications 1 ou 2, caractérisé par le fait que le mandrin de centrage (1, 1') de forme tubulaire est fermé à son extrémité inférieure par une plaque de fond (2) non magnétique et à son extrémité supérieure par une plaque de fermeture supérieure (3) également non magnétique et débordant la périphérie du mandrin de centrage, plaque de fermeture supérieure sur la face inférieure de laquelle sont fixés deux dispositifs de collage diamétraux (5, 6) susceptibles d'être commutés.

4. Dispositif magnétique de collage selon la revendication 3, caractérisé par le fait que sur la face inférieure et radialement saillante de la plaque de fermeture (3) est, en outre, disposé un palpeur électrique de proximité (7) qui se termine en direction axiale de mandrin, dans la région du dispositif de collage (5, 6).